# DEMANDE DE BREVET EUROPEEN

(11) **EP 1 065 399 A1**
(43) Date de publication de la demande: **03.01.2001**
(21) Numéro de dépôt: 00401812.3
(22) Date de dépôt: 26.06.2000
(51) Int. Cl.: F16D 7/08

(54) **Tige de commande à limiteur de couple intégré.**

(30) Priorité: 30.06.1999 FR 9908359
(71) Demandeur: Ecollect Sarl, 84303 Cavaillon Cedex (FR)
(72) Inventeur: Alamelle, Marie, 84300 Cavaillon (FR); Gayet, Alain, 92400 Courbevoie (FR)

(57) **Abrégé**

Le domaine de l'invention concerne le dispositif de tige de commande décrit dans le brevet FR 2759682 (cet à dire enceinte souterraine avec mécanisme de levage) permettant l'accouplement mécanique d'un moteur extérieur mobile avec la prise de force de ce mécanisme de levage.

Procédé à la fois, (i) de limitation de couple d'un moteur portable permettant de se garantir contre une surpuissance de ce dernier et (ii) d'obtention de ce fait d'interruption de course dans le fonctionnement normal d'un équipement.

Dispositif mettant en oeuvre ledit procédé, l'invention consistant à intégrer un limiteur de couple (16) au sein même de la tige de commande (13), entre ses deux extrémités spécifiques - celle (14) destinée à l'embout de serrage du moteur extérieur mobile et celle (15) destinée à la prise de force de l'équipement .

Ainsi construite, l'usage, incontournable, de la tige de commande (13) fournie avec l'équipement, entraîne *de facto* l'usage du bon limiteur de couple (16) fournissant ainsi la sécurité d'un débrayage face à tout couple anormal. Par ailleurs, sa mise en oeuvre présente alors l'avantage d'utiliser les variations considérables de couple observées dans le fonctionnement normal d'un équipement, conduisant le limiteur de couple (16) à entrer en action et constitue, de ce fait, le véritable interrupteur de commande entraînant l'arrêt de l'équipement.

## Description

Le domaine de l'invention est celui des conteneurs réceptacles de déchets solides, triés ou non, existants sur la voirie publique et susceptibles d'être enterrés sous cette voirie. Plus précisément l'invention concerne les dispositifs enterrés et sécurisés, avec mise en oeuvre d'un moteur extérieur mobile, pour permettre le relevage des conteneurs standards, objet du brevet français n° 97 01718 du 14 février 1997.

Encore plus précisément l'invention concerne le dispositif dit de tige de commande ou d'embout spécifique, décrit dans le brevet précité, et permettant l'accouplement mécanique du moteur extérieur mobile avec la prise de force du mécanisme de levage.

En fait, le problème rencontré dans ce type de solution provient de la liberté laissée à l'exploitant chargé de la collecte de pouvoir utiliser tous types de moteurs portatifs existants, autres que ceux qui sont recommandés, sous l'unique réserve de la compatibilité de la forme de l'embout de la tige de commande, du coté du moteur.

Il subsiste alors le risque de l'utilisation involontaire d'un moteur surpuissant.

En effet, en position haute ou basse, la poursuite de l'action, en force, du moteur extérieur mobile peut se traduire par l'existence d'un couple susceptible de dépasser le maximum admissible par le mécanisme de relevage et en particulier le réducteur qui s'y trouve et entraîner ainsi des dégâts irréversibles.

Même des recommandations techniques précises, spécifiant les matériels à utiliser, ne mets pas à l'abri l'équipement de l'usage intempestif d'un moteur surpuissant, action jugée incompatible de l'usage multi-décennal dans la rue, d'un équipement urbain.

Il convenait donc de trouver une solution pour prévenir, par un quelconque moyen, l'existence d'une telle possibilité.

Traditionnellement, dans un tel cas, une réponse semble être trouvée par l'existence de contacts de fin de course, mettant fin à l'action d'un moteur. Dans le cas présent, cette solution ne peut être mise en oeuvre de par la volonté de l'absence de câblage électrique dans la fosse et le caractère extérieur et mobile du moteur.

En fait, dans un tel cas, la seule possibilité réside dans la présence d'un limiteur de couple, intégralement mécanique.

Classiquement ce limiteur de couple peut trouver sa place dans deux endroits, soit associé au moteur extérieur mobile, soit associé au mécanisme de relevage, en fait, placé dans le réducteur.

Hors, associé au moteur extérieur mobile, il n'exclut pas l'usage d'un matériel surpuissant, entraînant les dégâts évoqués ci-dessus.

De même, associé au réducteur, en dehors d'une augmentation de coût sensible due au fait qu'il en faut alors un exemplaire par équipement, présente le redoutable inconvénient de fragiliser un mobilier urbain, qui, rappelons le, doit présenter un usage opérationnel multi-décennal. En outre, dans ce cas, il deviendrait définitivement impossible de relever l'équipement dans le cas d'une éventuelle immobilisation du dispositif de relevage pour des causes diverses allant du vandalisme au blocage accidentel.

L'objectif de présence d'un limiteur de couple adapté au problème à résoudre est atteint et les difficultés évoquées ci-dessus sont résolues selon l'invention consistant à placer le limiteur de couple au sein même de la tige de commande.

En effet, la tige de commande ainsi élaborée comprend :
(i) - Une extrémité spécifique à la prise de force, comme décrit dans le brevet précité, empêchant l'utilisation de matériel standard du commerce et écartant ainsi certains actes de vandalisme ou de malveillance.
(ii) - Une autre extrémité spécifique à l'embout de serrage de moteurs mobiles extérieurs, recommandant ainsi par ce biais, l'usage de produits professionnels réputés particulièrement adaptés à notre équipement.
(iii) - Entre les deux, présence d'un limiteur de couple, réglé à la valeur voulue pour un équipement donné.
Ainsi construite, l'usage, incontournable, de la tige de commande fournie avec l'équipement, entraîne *de facto* l'usage du bon limiteur de couple.

Par ailleurs, la mise en oeuvre du dispositif selon l'invention présente alors les avantages suivants :
(i) - Présence d'un réducteur de couple par tige de commande, laquelle est utilisée pour un grand nombre d'équipement, réduisant ainsi l'impact sur les coûts,
(ii) - La variation, considérable, du couple nécessaire au niveau de la tige de commande, à l'instant où l'équipage mobile ou son contrepoids arrive en position haute ou basse, conduit le limiteur de couple à entrer en action immédiatement et constitue, de ce fait, le véritable interrupteur de commande entraînant l'arrêt des mouvements.

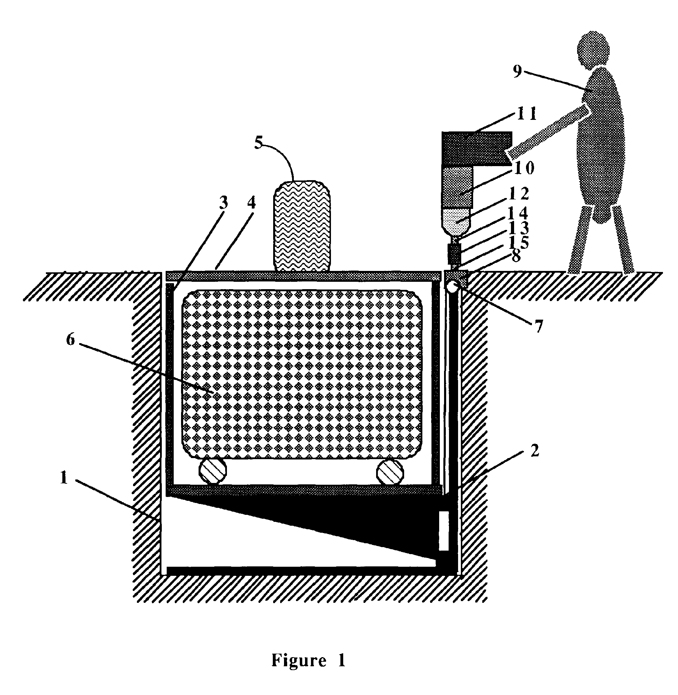

D'autres caractéristiques et avantages de l'invention apparaîtront à la lecture de la description d'une variante de réalisation de l'invention, donnée à titre d'exemple indicatif et non limitatif, et des figures 1 à 3 annexées présentant des vues schématiques en coupe de la réalisation d'un dispositif selon l'invention.

C'est ainsi que :
- la figure 1 illustre, en coupe, la situation générale de l'invention ;
- la figure 2 illustre, en coupe, la tige de commande objet de l'invention ;
- la figure 3 illustre, en coupe, un limiteur de couple ;

La mise en oeuvre du procédé selon l'invention permet d'effectuer les mouvements de montée et de descente, figure 1, d'un conteneur de déchets (6), placé dans une cabine (3), solidaire d'un mécanisme élévateur (2), lui-même placé dans une fosse (1), ladite cabine (3) étant surmontée d'un plateau (4), sur lequel est fixée une trémie (5) destinée à recevoir des déchets solides.

Le mécanisme élévateur (2), est mis en oeuvre par un opérateur (9), muni d'un moteur portable (10) équipé d'une batterie (11). Ledit moteur portable (10) entraîne grâce à son embout de serrage (12), une tige de commande (13) ayant un embout spécifique (14) à l'embout de serrage (12) du moteur portable (10).

La tige de commande (13) dans son autre extrémité (15) possède une forme spécifique et adaptée à la prise de force (8) du réducteur (7) entraînant le mécanisme de levage (2).

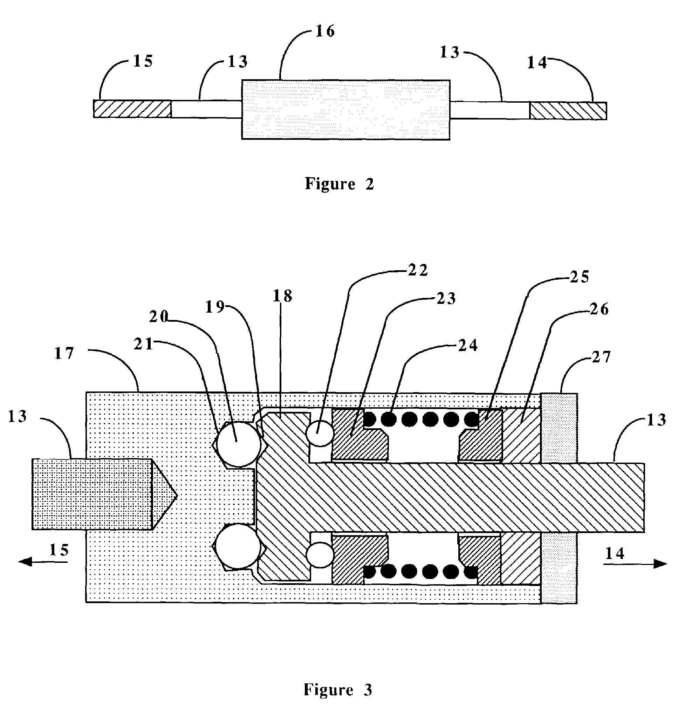

La figure 2 montre l'existence, au milieu de la tige de commande (13), entre son embout (14) adapté à l'embout de serrage (12) du moteur portable (10) et son embout (15) adapté à la prise de force (8) du réducteur (7) du mécanisme élévateur (2), d'un limiteur de couple (16) intégré à la tige de commande (13).

L'un des avantages du procédé selon l'invention vient de la possibilité de choisir le couple du limiteur de couple (16) de telle manière que celui-ci débraye dès le franchissement d'une limite connue.

C'est ainsi que le débrayage de la tige de commande (13), grâce au réglage du limiteur de couple (16), permettra de définir avec précision les points d'arrêt du mécanisme élévateur (2), aussi bien en position basse, quand la trémie (5) est susceptible de recevoir des déchets, qu'en position haute, quand on procède à la sortie du conteneur de déchets (6).

La figure 3 montre un exemple classique de réalisation d'un limiteur de couple (16) intégré dans une tige de commande (13) entre ses embouts adaptés (14) et (15).

Celui-ci est constitué d'une part, d'un corps (17) de type cylindrique, solidaire de la partie de la tige de commande (13), par exemple côté embout spécifique (15) adapté à la prise de force (8) et d'autre part d'un mécanisme (18 à 27), mis en oeuvre par l'autre extrémité de la tige de commande (13), par exemple côté embout spécifique (14) adapté à l'embout de serrage (12) du moteur portable (10).

L'extrémité (18), en forme de plateau, de la tige de commande (13) présente des alvéoles (19) dans lesquelles viennent se positionner un nombre égal de billes (20), elles-mêmes placées dans des alvéoles (21) creusées dans le corps (17) du limiteur de couple (16). Ce plateau (18) est plaqué contre les billes (20) par un puissant ressort (24) placé dans une cage (23 et 25), un roulement à billes (22) et une cale de tarage (26) complètent le dispositif, fermé par un couvercle (27) solidaire du corps (17) du limiteur de couple (16).

Les deux extrémités (14 et 15) de la tige de commande (13) sont entraînées solidairement par le moteur portable (10), dans la mesure où le placage du plateau (18) sur le corps (17) du limiteur (16) par l'intermédiaire des billes (20), est assuré par la pression du ressort (24).

Avantageusement en production de série, des épaisseurs de cale de tarage (26) différentes permettent aisément d'obtenir différentes valeurs du couple limite.

De même, le couvercle (27), habituellement soudé ou serti, et la cale de tarage (26) peuvent être remplacés par un couvercle se vissant dans le corps (17) du limiteur de couple (16), permettant ainsi un réglage en continu du couple limite.

On comprend ainsi que la mise en oeuvre de ce procédé selon l'invention constitue une remarquable réponse quant à l'assurance de disposer, quel que soit le moteur portable utilisé, de l'exact limiteur de couple nécessaire à un équipement donné.

En effet, ce procédé selon l'invention permet,
- d'une part, d'arrêter, avec précision, le mouvement quand le conteneur de déchets atteint sa position basse ou sa position haute,
- d'autre part, de protéger l'équipement en cas d'utilisation non désirée d'un moteur portable surpuissant
- enfin, de disposer en permanence pendant les mouvements de montée ou de descente, d'un organe de sécurité bloquant le mouvement en cas de difficultés provenant aussi bien d'un acte de vandalisme, que d'une quelconque défaillance mécanique.

## Revendications

1. Procédé consistant à limiter le couple de transmission d'un moteur portable (10) mettant en oeuvre un mécanisme élévateur (2) lequel effectue des mouvements de montée et de descente d'un conteneur de déchets (6) placé dans une fosse (1), caractérisé en ce que, la limitation de couple, outre sa fonction naturelle de protection en opération face à toutes difficultés dans les mouvements, permet également,
(i) de se garantir de l'utilisation non désirée d'un moteur portable surpuissant,
(ii) de disposer d'un véritable interrupteur de commande entraînant l'arrêt des mouvements du mécanisme élévateur (2) en position haute ou basse.

2. Dispositif de mise en oeuvre du procédé selon la revendication 1, caractérisé en ce que,
(i) le limiteur de couple (16) est intégré à une tige de commande (13) en étant placé entre les extrémités (14 et 15) de cette tige de commande (13),
(ii) l'extrémité (14) de cette tige de commande (13) est spécifique et adaptée à l'embout de serrage (12) d'un ou de plusieurs modèles de moteur portable (10),
(iii) l'autre extrémité (15) de la tige de commande (13) est spécifique à la prise de force (8) de l'équipement qu'elle doit entraîner,
*(ce qui a pour effet,*
*(i) que l'utilisation de la tige de commande ainsi réalisée, incontournable du fait de la spécificité de la prise de force (8), permet de se prémunir de l'usage intempestif d'un moteur portable (10) surpuissant,*
*(ii) de disposer ainsi d'un véritable interrupteur de commande entraînant l'arrêt des mouvements à l'instant où le mécanisme élévateur (2) arrive en position haute ou basse, conduisant ainsi le limiteur de couple (16) à entrer en action immédiatement).*
